# EUROPEAN PATENT APPLICATION

(11) **EP 2 301 382 A1**
(43) Date of publication of application: **30.03.2011**
(21) Application number: 09171366.9
(22) Date of filing: 25.09.2009
(51) Int. Cl.: A47B 9/00

(54) **Telescopic column for height adjustment**

(71) Applicant: Siemens AB, 141 87 Huddinge (SE)
(72) Inventor: Arvidsson, Ulf, 129 38, Hägersten (SE)
(74) Representative: Jacobsson, Peter

(57) **Abstract**

The present invention concerns a telescopic column (1) for height adjustment in particular of furniture, comprising a telescopic arrangement comprising an outer (10), a middle (20) and an inner (30) tube capable of telescopic movement relative to each other, a driving device (40) arranged inside the inner tube (30), and a threaded spindle (60) arranged inside the telescopic arrangement and attached to one end of the outer tube (10), **characterized in that** the telescopic column (1) further comprises an outwardly threaded tubular shaft (50) coupled to the driving device (40), the driving device (40) being arranged for rotating the tubular shaft (50), the inner tube (30) is provided with a nut (31) in threaded connection to the outward thread of the tubular shaft (50), the tubular shaft (50) is provided with an inward thread (51) in threaded connection to the threaded spindle (60), and wherein the outward thread of the tubular shaft (50) and the thread of the threaded spindle (60) have opposite directions.

## Description

### Technical Field

The present disclosure relates to telescopic columns for height adjustment in particular of furniture, and especially to telescopic columns having a driving device arranged inside the column.

### Background

Telescopic columns are known for a wide range of applications. In particular, telescopic columns are used in vertically adjustable furniture, such as tables, for varying the height of a table top attached to one end of the telescopic column.

A telescopic column normally comprises a telescopic tube arrangement and a threaded screw arranged inside the telescopic tube arrangement, driven by a motor. The motor is arranged to rotate the threaded screw, and the threaded screw is connected to the tube arrangement such that when the screw is rotated, a telescopic movement takes place between telescopically arranged tubes of the telescopic tube arrangement.

Telescopic columns generally comprise an outer tube of rectangular or circular cross-section and one or two inner tubes of the same cross-sectional shapes but with smaller diameters. Normally the motor is located outside the column as described in W02004041027, wherein the motor is located next to the column underneath the table top. Such solution makes the table column frame take unnecessarily large space under the table and there is a need for a more compact solution with the motor mounted inside the column.

DE102004046673 shows a telescopic column having two telescopically arranged tubes, an electrical motor arranged in the inner tube and a threaded spindle arranged to be rotated by the motor during telescopic movement. The spindle is arranged with one end attached to the bottom end of the outer tube and the inner tube has a nut in threaded connection to the spindle. When the spindle rotates, the nut moves along the spindle and telescopic movement between the tubes takes place.

It is desired in telescopic column solutions that the table keeps its stability even when the telescopic columns are in its most elongated state. It is also desired that the telescopic arrangement has a high flexibility in height, with a large length of stroke. A column with a larger length of stroke than in DE10200404673 is needed, but with the motor still arranged inside the column. To achieve this, a telescopic column with more than two telescopic tubes is needed.

### Summary

It is an object of the present invention to provide an improved solution that alleviates the mentioned drawbacks with present devices. Furthermore, it is an object to provide a column with large length of stroke and with a motor mounted inside the column.

This is achieved by a telescopic column for height adjustment, in particular of furniture, comprising a telescopic arrangement comprising an outer, a middle and an inner tube capable of telescopic movement relative to each other, a driving device arranged inside the inner tube, and a threaded spindle arranged inside the telescopic arrangement and attached to one end of the outer tube, **characterized in that** the telescopic column further comprises an outwardly threaded tubular shaft coupled to the driving device, the driving device being arranged for rotating the tubular shaft, the inner tube is provided with a nut in threaded connection to the outward thread of the tubular shaft, the tubular shaft is provided with an inward thread in threaded connection to the threaded spindle, and wherein the outward thread of the tubular shaft and the thread of the threaded spindle have opposite directions.

This arrangement gives a compact solution with a large length of stroke. Since all the tubes, the tubular shaft and the spindle are coaxial, the arrangement is very stable also in its most elongated state. When the tubular shaft rotates, the inner tube moves along the outward threads of the tubular shaft. When the shaft of the driving device is rotated for raising the table top that may be arranged to the column, expanding the telescopic column towards its elongated state, the movement of the inner tube along the outward threads of the tubular shaft results in a telescopic movement between the middle tube and the inner tube wherein the inner tube moves out of the middle tube. At the same time, the tubular shaft moves along the threads of the threaded spindle via the inward thread. Because of the opposite direction of the threading of the spindle, this results in a telescopic movement between the middle tube and the outer tube wherein the outer tube is pushed away from the middle tube in the opposite longitudinal direction than the movement of the inner tube. When the motor is rotated in the other way, the outer tube will be drawn onto the middle tube, and the inner tube will be drawn into the middle tube, and the telescopic column will collapse towards its most compressed state.

In one embodiment, the driving device may be mounted inside the inner tube, but moveable relative to the inner tube, and fixed relative to the middle tube. The fixed relationship between the driving device and the middle tube may be via the tubular shaft. A driving device moveable relative to the inner tube enables a more compact column when in its most compressed state, providing larger length of stroke.

The middle tube may be coupled to the tubular shaft, but the middle tube may not rotate when the tubular shaft rotates. In one embodiment the middle tube may be coupled to the tubular shaft via a bearing socket. In that way, the middle tube may not rotate when the driving device rotates the tubular shaft. But the middle tube moves in a longitudinal direction relative to the outer tube together with the tubular shaft.

According to an embodiment, the telescopic column may be provided with lead-throughs through the middle tube and the inner tube for receiving an electrical cable leading from the outer tube to the driving device. In this way, a power cable connected to the driving device may not only enter directly in the inner tube, but may instead enter the column in the outer tube and pass through the middle tube and the inner tube to the driving device. This has the advantage that the column may be mounted in any direction, with the inner tube or the outer tube facing a table top from which the power cable may be provided.

In a further embodiment, the lead-through for a power cable to pass into the middle tube may be located in the bearing socket coupled to the middle tube. In another embodiment, the lead-through for a power cable to pass into the inner tube may be located in the threaded nut arranged to the inner tube. This gives the advantage of an easier engagement of the power cable via the outer tube to the driving device.

Since the driving device and the middle tube may be fixed relative to each other, the middle tube is provided with a cable fixing for fixating in the middle tube a power cable leading to the driving device. This cable fixing may in one embodiment be arranged in the lead-through in the middle tube.

In this way, there may not be any forces on the power socket connection between the power cable and the driving device when the telescopic arrangement is moving.

### Brief Description of the Drawings

The invention will in the following be described in more detail with reference to the enclosed drawings, wherein:
Fig 1 schematically illustrates a longitudinal cross-section of a telescopic column in an elongated state,
Fig 2 schematically illustrates a longitudinal cross-section of a telescopic column in a compressed state,
Fig 3 schematically illustrates a cross-section in cut C-C of the telescopic column of Fig 1,
Fig 4 schematically illustrates a longitudinal cross-section of another telescopic column in an elongated state,
Fig 5 schematically illustrates a longitudinal cross-section of another telescopic column in a compressed state.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

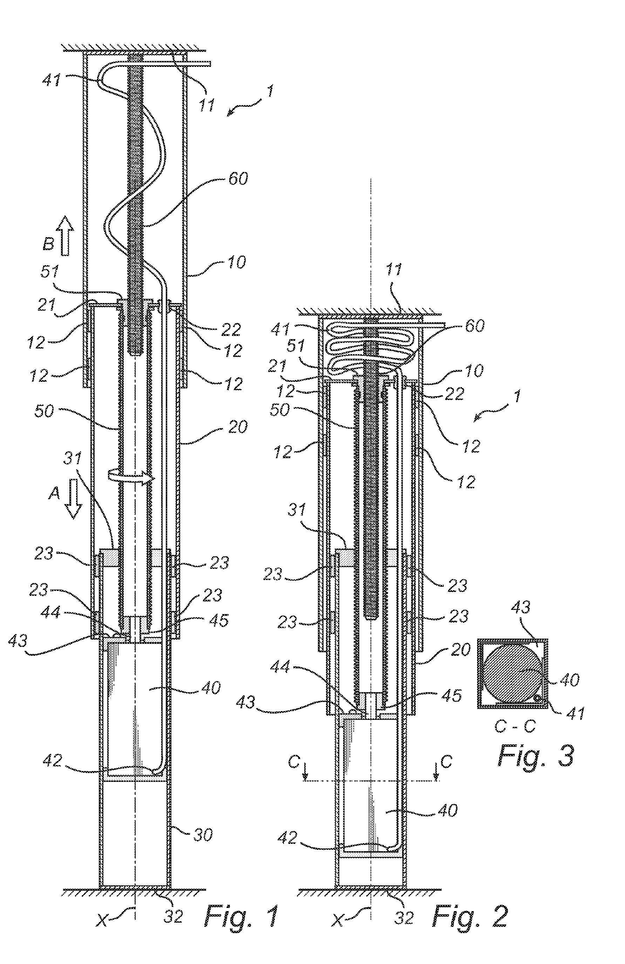

Figures 1-5 describe a telescopic column 1 according to the invention. The telescopic column 1 comprises three tubes; an outer tube 10, a middle tube 20 and an inner tube 30. The three tubes 10, 20, 30 are coaxial and have a longitudinal axis X. The three tubes 10, 20, 30 have square cross-sections and are arranged for telescopic movement relative to each other. The inner dimensions of the outer tube 10 are larger than the outer dimensions of the middle tube 20 such that the middle tube 20 can be inserted into the outer tube 10. In the same way are the inner dimensions of the middle tube 20 larger than the outer dimensions of the inner tube 30, such that the inner tube 30 can be inserted into the middle tube 20. Thereby are the three tubes 10, 20, 30 arranged for telescopic movement relative to each other.

Inside the inner tube 30 is a motor 40 arranged. The motor 40 has a circular cross-section and is attached to a motor guide 43. The motor guide 43 has a square shape and is adapted to slide inside the inner tube 30 so that the motor 40 does not rotate itself inside the inner tube 30 but is moveable relative to the inner tube 30 in a longitudinal direction.

The outgoing shaft 44 of the motor is attached to an outwardly threaded tubular shaft 50 via a motor connection bracket 45. The tubular shaft 50 is arranged to be rotated by the motor 40 around the longitudinal axis X.

The tubular shaft 50 is via its outward threads in threaded connection with a first nut 31. The first nut 31 is attached to one end of the inner tube 30. When the tubular shaft 50 is rotated by the motor 40, the first nut 31 moves along the tubular shaft 50 such that a movement in a longitudinal direction occurs between the tubular shaft 50 and the inner tube 30.

At one end of the outer tube 10 is a threaded spindle 60 arranged. The spindle 60 is arranged coaxial with the tubes 10, 20, 30 and the tubular shaft 50, and is attached to an end plate 11 of the outer tube 10. The spindle 60 elongates from the end plate 11 towards the other end of the outer tube 10, and terminates with a free end. The length of the spindle 60 is shorter than the length of the outer tube 10.

The spindle 60 is in threaded connection with a second nut 51, which second nut 51 is attached to one end of the tubular shaft 50. The second nut 51 is attached to the inside of the tubular shaft 50. When the motor 40 rotates the tubular shaft 50, the second nut 51 rotates around the spindle 60 such that a movement in a longitudinal direction occurs between the spindle 60 and the tubular shaft 50. The second nut 51 is further coupled to the middle tube 20 via a bearing socket 21. The bearing socket 21 is attached to the middle tube 20. The rotational movement of the second nut 51 is not transferred to the bearing socket 21, but the longitudinal movement of the second nut 51 relative to the spindle 60 and the outer tube 10 is transferred to the bearing socket 21 and the middle tube 20.

The outward threads on the tubular shaft 50 and the threads on the spindle 60 have different directions. If the outward threads on the tubular shaft 50 are clockwise, then the threads on the spindle 60 are counterclockwise.

This arrangement in the telescopic column 1 provides that when the shaft 44 of the motor 40 rotates clockwise, the tubular shaft 50 and the second nut 51 also rotates clockwise. Since the threads on the spindle 60 is counterclockwise, the second nut 51 then moves in a longitudinal direction A along the spindle 60, pushing the spindle 60 and the outer tube 10 away from the tubular shaft 50 and the middle tube 20. At the same time, the first nut 31 moves along the clockwise rotating tubular shaft in the same longitudinal direction A, because of the clockwise threads on the tubular shaft 50, pushing the inner tube 30 away from the tubular shaft 50 and the middle tube 20. The motor 40 and the motor guide 43 slides along the inside of the inner tube 30 towards the end of the inner tube 30 wherein the first nut 31 is attached. The motor 40 is fixed relative to the middle tube 20. The telescopic column 1 then reaches its most elongated state, as shown in figure 1.

When the motor 40 is rotated counterclockwise, the opposite movement occurs wherein the second nut 51 moves along the spindle 60 in a longitudinal direction B, drawing the outer tube 10 onto the middle tube, and the first nut 31 moves along the tubular shaft 50 in the same longitudinal direction B, drawing the inner tube 30 into the middle tube 20. The telescopic column 1 then reaches a compressed state, as shown in figure 2.

In the embodiment of the telescopic column 1 described in the figures 1 and 2, a power cable 41 for the motor 40 enters the telescopic column 1 at the end of the outer tube 10, next to the end plate 11. For the power cable 41 to reach a power socket 42 of the motor 40, it runs through the three tubes 10, 20, 30. The bearing socket 21, the first nut 31 and the motor guide 43 is provided with lead-throughs for the power cable. Since the motor 40 is fixed relative to the middle tube 20, the power cable 41 will slide in the lead-through in the first nut 31 during elongation or contraction of the telescopic column 1. The lead-through in the bearing socket 21 is provided with a cable fixing 22 for fixing the power cable and function as a cable de-tensioner. Thereby, the power cable 41 is fixed relative to the motor 40, and is always elongated between the power socket 42 and the cable fixing 22. The lead-throughs are formed as holes in the motor guide 43 and first nut 31, but may as well be formed in any other way providing free movement of the power cable 41 relative to the motor guide 43 or the first nut 31. The lead-throughs are provided in one corner of the square shaped tube arrangement. With this embodiment of the telescopic column 1, used as a leg of vertically adjustable furniture, an end plate 32 of the inner tube 30 may face the floor, and the end plate 11 of the outer tube 10 may face for instance a table top.

Between the outer tube 10 and the middle tube 20 are first slide bearings 12 provided. Second slide bearings 23 are also provided between the middle tube and the inner tube. These first and second slide bearings 12, 23 are attached to one of the tubes that they are arranged between and arranged to slide against the other tube. The first slide bearings 12 are therefore attached to the middle tube 20 and are arranged to slide against the outer tube 10. The second slide bearings 23 are attached to the inner tube 30 and are arranged to slide against the middle tube 20. The slide bearings 12, 23 are provided to stabilize the tube arrangement and to provide easy and smooth slide movement during the telescopic movement between the tubes 10, 20, 30. The slide bearings 12, 23 could be of the same kind and can be made of a plastic material.

Figure 3 describes a cross-section in cut C-C of the telescopic column 1 of figure 2, wherein the motor 40, the power cable 41 and the motor guide 43 is shown inside the inner tube 30. The power cable 41 runs through a lead-through in the motor guide 43. The motor 40 is attached to the motor guide 43 to prevent the motor 40 from rotating inside the inner tube 30.

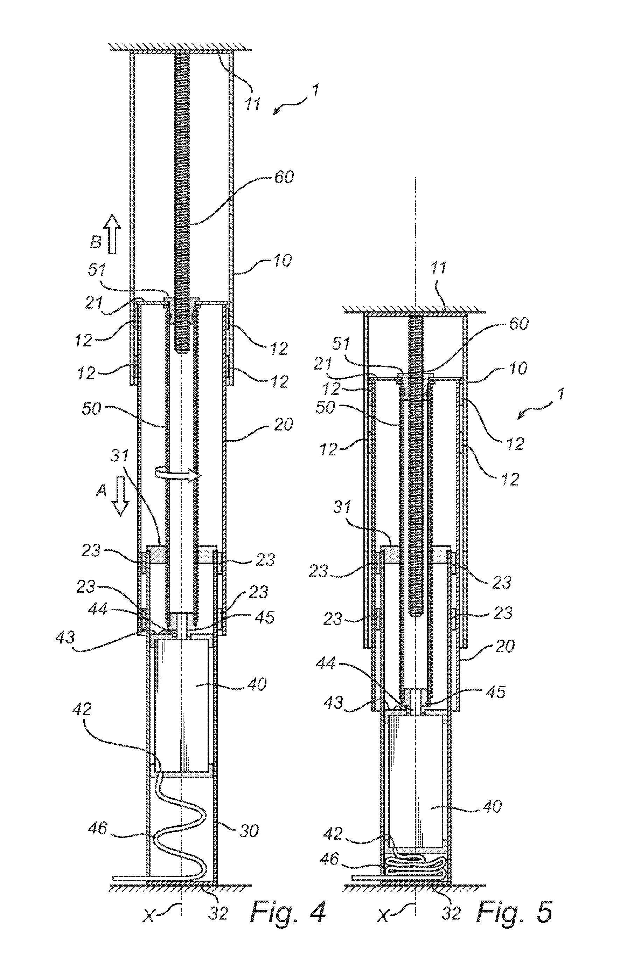

Figures 4 and 5 describe another embodiment wherein a power cable 46 enters the telescopic column 1 in the inner tube 30, next to the end plate 32. The power cable 46 is connected to the motor 40 at the power socket 42. In this embodiment, when used in furniture, the end plate 11 of the outer tube 10 may face the floor, and the end plate 32 of the inner tube 30 may face a table top.

With these two embodiments, in figures 1-3 and 4-5, it is shown that the telescopic column 1 of the invention may be used in any direction, since the possibility is provided, by means of the lead-throughs, for a power cable 41, 46 to enter the telescopic column 1 in either the end of the outer tube 10 or the end of the inner tube 30.

The bearing socket 21 attached to the middle tube 20 and coupled to the second nut 51 and the tubular shaft 50, may in one embodiment not be necessary. In such embodiment there is no connection between the tubular shaft 50 and the middle tube 20. Instead, the inner tube 30 can be provided with means for pushing the middle tube 20 in a longitudinal direction when elongating the telescopic column 1. When the motor 40 rotates the tubular shaft 50 and the first nut 31 moves along the tubular shaft 50, pushing the inner tube 30 away from the middle tube, the pushing means, at one point during the elongation, gets in connection with, for instance, an end catch at one end of the middle tube 20, providing a pushing of the middle tube 20 along with the inner tube 30 towards the end position of the elongated telescopic column 1. The inner tube 30 and the middle tube 20 are thereby fixed relative to each other during the last part of the elongation. The driving device 40 and the tubular shaft 50 are thereby no longer fixed relative to the middle tube 20. When collapsing the telescopic column 1, means in the inner tube 30 is in the same way getting in connection with means in the middle tube 20 somewhere along the longitudinal movement towards the compressed state of the telescopic column 1, pulling the middle tube 20 towards its end position.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A telescopic column for height adjustment in particular of furniture, comprising:
a telescopic arrangement comprising an outer (10), a middle (20) and an inner tube (30) capable of telescopic movement relative to each other;
a driving device (40) arranged inside the inner tube; and
a threaded spindle (60) arranged inside the telescopic arrangement and attached to one end of the outer tube (10);
**characterized in that**
the telescopic column further comprises an outwardly threaded tubular shaft (50) coupled to the driving device (40), the driving device (40) being arranged for rotating the tubular shaft (50), the inner tube (30) is provided with a nut (31) in threaded connection to the outward thread of the tubular shaft (50), the tubular shaft (50) is provided with an inward thread (51) in threaded connection to the threaded spindle (60), and wherein the outward thread of the tubular shaft (50) and the thread of the threaded spindle (60) have opposite directions.

2. Telescopic column according to claim 1, wherein the driving device (40) is moveable relative to the inner tube (30) and fixed relative to the middle tube (20).

3. Telescopic column according to claim 1 or 2, wherein the middle tube (20) is coupled to the threaded tubular shaft (50) via a bearing socket (21).

4. Telescopic column according to any of the preceding claims,
wherein the arrangement is provided with lead-throughs through the middle tube (20) and the inner tube (30) for receiving an electrical cable (41) leading from the outer tube (10) to the driving device (40).

5. Telescopic column according to claim 3 and 4, wherein the lead-through through the middle tube (20) is provided in the bearing socket (21).

6. Telescopic column according to claim 4 or 5, wherein the lead-through through the inner tube (30) is provided in the threaded nut (31).

7. Telescopic column according to any of the preceding claims, wherein the middle tube (20) is provided with a cable fixing (22) for fixating in the middle tube an electrical cable leading to the driving device.

8. Telescopic column according to claim 7, wherein the cable fixing (22) is arranged in the lead-through of the middle tube.
